# EUROPEAN PATENT SPECIFICATION

(11) **EP 3 937 013 B1**
(45) Date of publication and mention of the grant of the patent: **01.05.2024**
(21) Application number: 21176612.6
(22) Date of filing: 02.08.2012
(51) Int. Cl.: G06F 9/445, G06F 8/65

(54) **SOFTWARE DISTRIBUTION TO MEDICAL DEVICES VIA AN INTERMEDIARY WHICH ENFORCES MAINTENANCE OF A TRANSACTION LOG**
SOFTWAREVERTEILUNG AN MEDIZINISCHE GERATE UBER EINE ZWISCHENSCHALTUNG MIT OBLIGATORISCHER PFLEGE EINES TRANSAKTIONSPROTOKOLLS
DISTRIBUTION DE LOGICIELS A DES DISPOSITIFS MEDICAUX PAR LE BIAIS D'UN INTERMEDIAIRE QUI GERE UN JOURNAL DE TRANSACTIONS

(30) Priority: 02.08.2011 US 201113195893
(43) Date of publication of application: 12.01.2022
(62) Divisional of application: 12751277.0
(73) Proprietor: Roche Diabetes Care GmbH, 68305 Mannheim (DE); F. Hoffmann-La Roche AG, 4070 Basel (CH)
(72) Inventor: BIRTWHISTLE, Daniel P., Fishers, 46037 (US)
(74) Representative: Bittner, Thomas L.

(56) References cited:
- US-A1- 2006 271 924

## Description

### Technical Field

The present disclosure relates generally to a digital distribution platform and, more particularly, to a method for distributing a product update in a digital distribution platform.

### Background

Increasingly, the healthcare industry is turning to portable electronic medical devices to assist with care of patients. For example, a diabetes patient may use a blood glucose meter, an insulin pump, and/or a continuous glucose meter as part of the patient's medical treatment. Each of these devices is configured with suitable software for operating the device. When the software needs updating, the patient was traditionally required to send the device to the device manufacturer. The device manufacturer would in turn install new versions of the software on the medical device and return the updated device back to the patient. In other situations, a device manufacturer might send a computer readable disk which contains updated versions of the software to either the patient or their healthcare provider. The disk could then be used to update the software on the medical device. Each of these approaches has drawbacks.

Rather than receive product updates directly from device manufacturer, it may be more preferable for patients to receive product updates from an intermediary such as their health care provider. Thus, there is a need for a distribution platform that supports distribution of product updates through an intermediary to one or more end user medical devices. Since the intermediary device itself may be mobile, the distribution platform should support tracking product updates when the intermediary device is offline from the distribution server.

This section provides background information related to the present disclosure which is not necessarily prior art.

Prior art document US 2006 / 271 924 A1 discloses a computer implemented method for performing software operations for a target software on the computer as well as a data processing system. The method comprises: responsive to an activation of a target software, determining whether an updated dependency file is present at a remote source for use in performing a software operation for the target software; responsive to the updated dependency file being present, downloading the updated dependency file from the remote source; determining whether an absence of a failed condition is present using the updated dependency file; and performing the software operation for the target software, in response to the absence of the failed condition.

### Summary

A method for distributing a product update in a digital distribution platform and a digital distribution platform according to the independent claims are provided.

In an illustrative example, a software configuration device may be provided for distributing product updates to a plurality of end user devices, comprising a transaction log operable to store distribution data for product updates, a download manager in selective data communication with an update interface residing at a server, the download manager operable to download product updates from the update interface and store the product updates on a data store residing on the device, and an update distributor configured to capture identifying information for a user and operable by the user to distribute product updates to one or more end user devices, wherein the update distributor may maintain distribution data, including identifying information for the user, in the transaction log for each of the distributed product updates, the download manager subsequently may upload the transaction log to the server while in data communication with the server, and wherein the user of the update distributor may differ from a user associated with at least one of the end user devices receiving a product update from the update distributor.

In another illustrative example, a method for distributing product updates from a software configuration device to a plurality of medical devices may be is provided, comprising downloading a product update from a server over a computer network to the software configuration device, capturing identifying information for a user of the software configuration device, distributing the product update by the user of the software configuration device to a requesting medical device when the software configuration device is offline from the server, and maintaining distribution data for the product update, including identifying information for the user, in a transaction log residing on the software configuration device.

The update distributor may be operable to distribute product updates when offline from the update interface. The download manager, during registration of itself with the update interface, may provide identifying information for an owner of the configuration device, including an address for the owner, and identifying information for the configuration device. The owner of the configuration device may be different from an owner of at least one of the end user devices receiving a product update from the update distributor. The update distributor may be operable by a plurality of different users to distribute product updates and logs a transaction for each product update in the transaction log, including identifying information for the respective user who distributed a given product update. The update distributor, upon distributing a product update to a given end user device, may capture identifying information for a given end user device and logs a transaction for the product update in the transaction log, including the identifying information for the given end user device. The update distributor, upon distributing a product update to a given end user device, may capture identifying information for an owner of the given end user device and logs a transaction for the product update in the transaction log, including the identifying information for the given end user device. The download manager may query the update interface for a latest version of a given product update and receives the latest version of the given product update in response to the query. The download manager may request an upgrade for the given product update and receives a download of the given product update in response to the upgrade request. The software configuration device may further comprise a dependency file operable to store one or more dependencies for a given product update that must be met before the product update can be downloaded, wherein the update distributor may be configured to receive a request to download the given product update from a requesting end user device and, in response to the download request, retrieve the one or more dependencies for the given product update from the dependency file, where at least one of the dependencies for the given product update specifies a version of software that resides on a device which is interoperable with the requesting end user device, and wherein the update distributor may be further configured to receive a listing of peer devices that are interoperable with the requesting end user device and, in response to the download request, compares the at least one dependency with software residing on each peer device in the listing of peer devices and distributes the given product update to the requesting end user device when the at least one dependency is met. The download manager may further retrieve the dependency file from the server. The update distributor may be configured to receive the listing of peer devices from the requesting end user device, the listing includes an enumeration of software residing on each peer device in the listing. The update distributor may operate to distribute the given product update to the requesting end user device when the software residing on the each peer device has a version as recent as the version of software specified by the at least one dependency. The update distributor may be configured to receive an identifier for the geographic region associated with the requesting end user device from the requesting end user device, the update distributor operable to compare the identifier to another dependency and distribute the given product update to the requesting end user device when the another dependency is met, such that the another dependency specifies an intended geographic area of use for the product update. The update distributor may be operable to determine one or more dependencies that specify a version of software that resides on the requesting end user device and distribute the given product update to the requesting end user device when each of the one or more dependencies are met. The update distributor may be operable to determine a first dependency that specifies a version of a first software entity and a second dependency that specifies a version of a second software entity, and distribute the given product update to the requesting end user device when the first and second dependencies are met, where the first and second software entities reside on different peer devices.

The method may further comprise subsequently uploading the transaction log from the configuration device to the server. The method may further comprise capturing identifying information for an owner of the configuration device, including an address for the owner, during registration of the configuration device with the server. The method may further comprise capturing identifying information for a given medical device and logging a transaction for the product update in the transaction log, including the identifying information for the given medical device upon distributing the product update to the given medical device. The method may further comprise capturing identifying information for an owner of a given medical device and logging a transaction for the product update in the transaction log, including the identifying information for the given medical device upon distributing the product update to the given medical device.

This section provides a general summary of the disclosure, and is not a comprehensive disclosure of its full scope or all of its features. Further areas of applicability will become apparent from the description provided herein. The description and specific examples in this summary are intended for purposes of illustration only and are not intended to limit the scope of the present disclosure.

### Brief description of the drawings

- FIG. 1: is a diagram depicting an exemplary digital distribution platform for distributing product updates to end user medical devices.
- FIG. 2: is a diagram depicting an exemplary construct for the distribution server.
- FIG. 3: is a diagram depicting an exemplary method for distributing product updates through an intermediary using the digital distribution platform.
- FIG. 4: is a diagram depicting an exemplary method by which a configuration application retrieves product updates from the distribution server.
- FIG. 5: is a diagram of an exemplary data model for the distribution database.
- FIG. 6: is a diagram of an exemplary data model for the audit database.
- FIG. 7: is a diagram depicting an exemplary construct for the configuration device.
- FIG. 8: is a diagram depicting an exemplary method for distributing product updates from the configuration device to one or more end user devices.
- FIG. 9: is a diagram illustrating an exemplary use case for distributing product updates from a configuration device.
- FIG. 10: is a flowchart depicting an exemplary method for distributing product updates which accounts for dependencies amongst devices.

The drawings described herein are for illustrative purposes only of selected embodiments and not all possible implementations, and are not intended to limits the scope of the present disclosure. Corresponding reference numerals indicate corresponding parts throughout the several views of the drawings.

### Detailed description

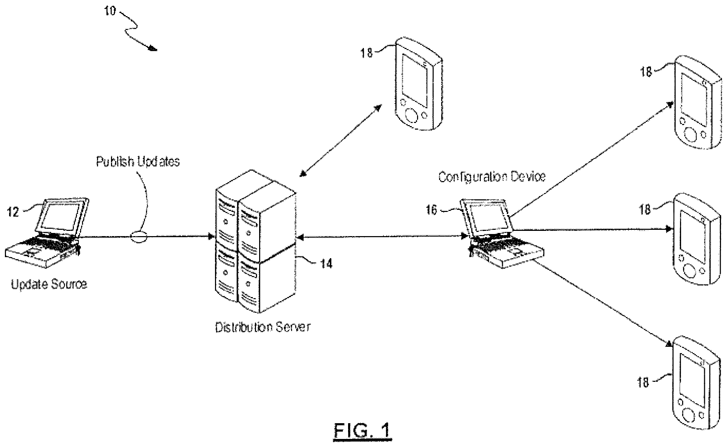

FIG. 1 depicts an exemplary digital distribution platform 10 for distributing product updates to handheld medical devices such a blood glucose meter or an insulin pump. The distribution platform 10 is comprised generally of: an update source 12, a distribution server 14, a configuration device 16 and one or more medical devices 18. Each of the components is further described below. While the following description is provided with reference to medical devices, it is readily understood that the concepts disclosed herein are applicable more generally to other types of portable consumer electronic devices.

The update source 12 enables users to publish or otherwise make available product updates for medical devices 18 via the distribution server 14. Product updates are files that contain updates for a device. For example, a product update can be an update to a software application, firmware, a language file, and/or a database residing on the device. Product updates can also encompass updates to device parameters, user documentation or other types of data files. Other types of product updates are also contemplated by this disclosure. In an exemplary embodiment, the update source 12 is further defined as a desktop personal computer or some other computing device having access over a network to the distribution server 14.

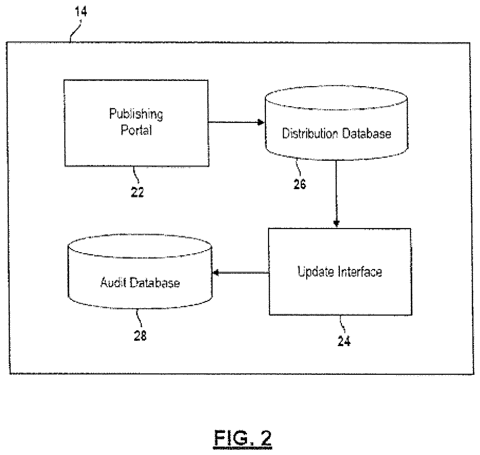

FIG. 2 further illustrates an exemplary construct for the distribution server 14. The distribution server 14 includes a publishing portal 22, an update interface 24, a distribution database 26 and an audit database 28. The publishing portal 22 provides an interface to publish product updates. In an exemplary embodiment, the portal 22 may be one or more web pages accessible by the update source 12. Publishers of product updates may use the portal 22 to configure the parameters associated with the product update. For example, the publisher may specify one or more countries for which the product update is to be available. In another example, the publisher may specify conditions or dependencies which must be meet to install the product update. The portal 22 then publishes the product update by creating an entry for the product update in the distribution database 26. Further details regarding an exemplary publishing portal 22 may be found in U.S. Patent Application entitled "Remote Configuration and Selective Distribution of Product Content to Medical Device".

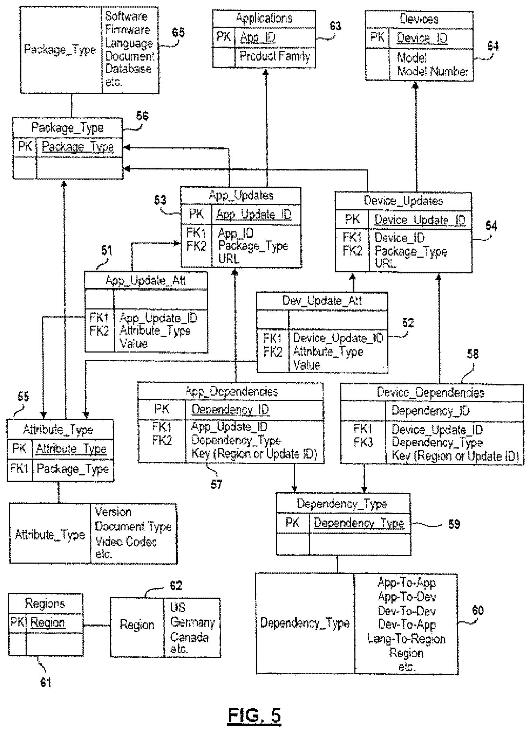

FIG. 5 depicts exemplary data model for how the distribution database 26 could be constructed. Of note, the data model supports defining dependencies between products (i.e., applications) as well as devices. Dependencies are used in order to determine if a product is capable of being updated as further described below.

More specifically, the data model includes an application update attribute element 51 and a device update attribute element 52. The application update attribute element 52 includes foreign keys relating the application update attribute element 52 to an application update element 53 and an attribute type element 55. Similarly, a device update attribute element 52 has foreign keys relating the update attribute element 52 to a device update element 54 and the attribute type element 55. The attribute type 55 stores an attribute type and include a foreign key that relates the attribute type 55 to a package type element 56. Examples of attribute types include a version, a document type or a video codec.

The data model further includes an application dependency element 57 and a device dependency element 58. The application dependency element 57 has a primary key indicating a dependency identifier for the application, and foreign keys that relate an application dependency element 57 to the application update element 53 and a dependency type element 59. Similarly, the device dependency element 58 includes a primary key indicating a dependency identifier, as well as foreign keys that relate a device dependency element 58 to a device update element 54 and a dependency type element 59. Both the application dependency element 57 and the device dependency element 58 can include a key that references a region element 61 or another update id.

The dependency type element 59 defines a type of dependency. Examples of dependency types include a device-to-device dependency, meaning that an update or action must be performed on one device in order for an update can be applied to another device. Another example of a dependency type is an application-to-application, meaning that an update or action must be performed on one application in order for a requested update to be applied to another application. The dependency types can also include device-to-application, language-to-region, regional dependencies, and other update dependencies.

The application update attribute element 51 and the application dependency element 54 both relate to the application update element 53. Similarly, the device update attribute element 52 and the device dependency element 58 both point to the device update element 54. The application update element 53 includes a primary key of an application update identifier and foreign keys that relate an application update element 53 to an application element 63 and to a package type element 56. The application update element 53 can also store a location of an application update file corresponding to the update package, e.g. the URL of the application update file. The device update element 54 includes a primary key indicating a device update identifier and foreign keys that relate a device update element 54 to a device element and the package type element. The device update element 54 can also store a location of a device update file corresponding to the update package.

Application update elements 53 relate to an application element 63 and device update elements 54 relate to a device element 64. The application element 63 includes a primary key indicating an application identifier. The application element 63 can further store the product family members of the application, including the products that the application can execute on. The device element 64 includes a primary key that indicates a device identifier and can further store a model and model number of the device.

The package type element 56 is referenced by the application update element 53, the device update element 54 and the attribute type element 55. The package type element 56 includes a package type as a primary key. Examples of package types include a software update, a firmware update, a language update, a document update, and a database update. The region element 61 may be referenced by a dependency element 57 or 58. The region element can include a list of regions that an update is intended for. The regions can be countries, continents, geographical regions, or another geographical division. It is appreciated that the foregoing is an exemplary structure of the distribution database 26. It is appreciated that variations of the foregoing are contemplated and within the scope of this disclosure.

With continued reference to FIG. 2, the update interface 24 is configured to distribute product updates published in the distribution database 26. When a requesting device queries the update interface 24 for the latest versions of available product updates, the update interface 24 responds by querying the distribution database 26 and provides a listing of available product updates to the requesting device. The update interface 24 may subsequently receive a request to download a particular product update. In response to the download request, the update interface 24 will download the product update to the requesting device and maintain a record of the download in the audit database 28. Each of these functions is further described below.

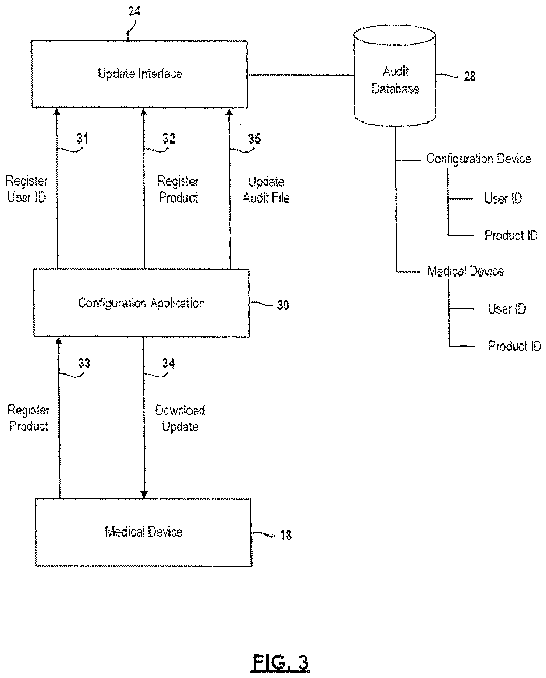

FIG. 3 illustrates an exemplary method for distributing product updates through an intermediary using the digital distribution platform 10. In an exemplary use case, product updates may be downloaded from the distribution server 14 to an intermediary, such as a health care provider. More specifically, the product updates are downloaded to a configuration application 30 residing on a configuration device 16 associated with the health care provider. In an exemplary embodiment, the configuration device 16 is a desktop personal computer residing at the office of the health care provider. The healthcare provider will in turn download product updates to the medical devices of their patients. To do so, patients will typically bring their medical devices with them when visiting their healthcare provider. The medical devices 18 can communicate either via a wired or wireless connection with the configuration device 16. For regulatory compliance, it is important to capture information regarding the identity of the healthcare provider distributing product updates as well as the identity of the medical device receiving product updates.

Upon installation of a configuration application 30 on a configuration device 16 or sometime thereafter, the configuration application 30 will operate to register itself with the update interface 24 provided by the distribution server 14. Registration will include capturing information at 31 that uniquely identifies the healthcare providing entity associated with the configuration application, where a healthcare providing entity is understood to be an individual, such as physician or a nurse, or a collection of individuals such as group medical practice or a hospital. Exemplary identifying information for a healthcare provider may include name, address, practitioner license number, and the like. Registration will also include capturing information at 32 that uniquely identifies the configuration application (i.e., Application Info) and/or the configuration device. Exemplary identifying information for a unique application may include the product family, an application identifier, a version number for the application currently installed as well as other types of identifying information. Such identifying information may be gathered by querying a user or some other suitable method. Captured registration information will then be communicated to and stored by the update interface 24. Once properly registered, the configuration application 24 can interface with the update interface 24 to retrieve product updates from the distribution server 14.

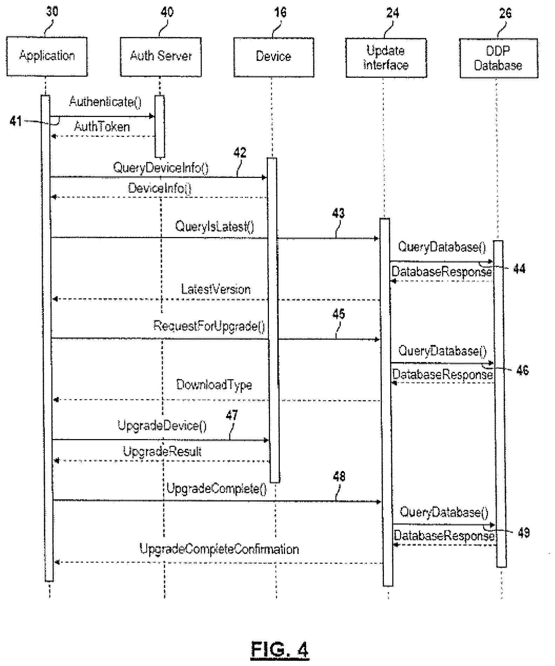

In an exemplary embodiment, the configuration application 30 operates to retrieve product updates from distribution server 14 as shown in FIG. 4. Before querying the update interface for available updates, the configuration application may first authenticate at 41 with an authenticating entity 40. The authentication entity may reside on a separate distinct server or the distribution server. When successfully authenticated, the authentication entity 40 returns an authentication token to the configuration application 30. Various authentication schemes are readily known and are suitable for use in this context. The configuration application 30 may then use the authentication token while interfacing with the distribution server 14.

The configuration application 30 may optionally query the device it resides on at 42 to learn identifying information for the device (i.e., Devicelnfo). Exemplary identifying information may include a model of the device, a current model number for the device, a device type, a serial number for the device, a version number for firmware currently installed on the device as well as other identifying information. The identifying information is returned to the configuration application 30 in response to the query. In other embodiments, identifying information for the device may be determined at installation and retained for subsequent use by the configuration application 30.

To initiate a download, the configuration application 30 first queries the update interface at 43 for available product updates. The query will include identifying information for either the configuration application or the configuration device. The query may include information that further identifies the request such as the region or geographic location of the product. The query may also include an authentication token for authenticating the request at the distribution server. This information may be used to constrain the query results. For example, a given configuration application may support only certain products and thus only a listing of updates for the supported products are provided in the query results. Similarly, geographic location may be used to provide a listing of available product updates applicable to the geographic location. Since medical devices are typically regulated at a country level, distribution of product updates should be controlled on a country basis or within some other applicable geographic area, such as countries forming the European Union.

Upon receipt of the query, the update interface 24 would in turn query the distribution database 26 at 44 to determine product updates available to the configuration device and communicate a listing of available product updates back to the configuration device in response to the query.

Given a list of available product updates, the configuration application 30 is configured to retrieve one or more product updates from the distribution server 14. For example, the configuration application 30 may scroll through the listing of available product updates. In an exemplary embodiment, product updates are segmented as packages. Thus, each entry in the listing will include a package identifier, a package type (e.g., software, firmware, language, document, database, etc.), and a version number for the package. Each update may further include a version and any dependencies associated with that update version. For each package, the configuration application 30 may compare the version of the package to a listing of previously downloaded packages. When a more current version of a package is available, the configuration application 30 will make a request for an upgrade as indicated at 45.

Upon receipt of a download request from the configuration application 30, the update interface 24 will query at 46 the distribution database 26. In one exemplary embodiment, the update interface 24 retrieves the data (or files) comprising the product update from the distribution database 26 and forwards the product update to the configuration device 16. In another embodiment, a uniform resource locator (URL) is retrieved and returned to the configuration application. The URL can then be used by the configuration application 30 to download the product update. The URL may be accompanied by a listing of the files in the requested package, their respective sizes and signatures. Other implementations for downloading updates by the configuration device fall within the broader aspects of this disclosure. In any case, the configuration application 30 upgrades the device at 47 with the downloaded updates. For updates pertaining to the configuration device, the upgrades may be immediately implemented by the configuration application. On the other hand, updates intended for medical devices 18 are stored in a data store on the configuration device 16 and thereby made available for subsequent download by such devices.

Once the upgrade has been completed, the configuration application 30 may verify the upgrade attempt. For example, the configuration application may compile a report enumerating the result of the upgrade attempt associated with the requested package. A message reporting the result of the upgrade is then communicated at 48 from the configuration application 30 to the update interface 24. The confirming message may be a singular status indicator (e.g., successful or failure) and/or include the more comprehensive report compiled by the configuration application. Lastly, the configuration application 30 will update at 49 the audit database 28 with an entry regarding the download to the configuration device 16. Thus the audit database 28 creates a log of the updates downloaded to the configuration application 30, including information identifying the user or owner of the configuration application and information identifying the configuration application or the device it resides on.

Likewise, for medical devices receiving product updates, it is important to capture information identifying these medical devices and/or the users thereof. With continued reference to FIG. 3, each medical device 18 will register itself at 33 with the configuration application 30 associated with the patient's healthcare provider. Such registration is required before a medical device can download updates from the configuration application. During registration, the configuration application 30 will capture information that uniquely identifies the medical device (e.g., device serial number). Although not required in all embodiments, the configuration application 30 may also capture information that uniquely identifies the healthcare recipient or user of the device. This type of information may be captured by querying the device for such information or querying the user directly. In most scenarios, it is noteworthy that the user of the medical device differs from the healthcare provider (i.e., the user of the configuration application). Information for the medical devices registered with a given configuration application may be stored by the configuration application and/or the update interface residing at the distribution server.

Product updates can then be distributed by the configuration device 30 at 34 to registered medical devices 18. Exemplary techniques for distributing the product updates are further described below. Upon successfully distributing a product update to a given medical device, a record of the product update is created and maintained in a transaction log by the configuration application. This record of the product update is communicated subsequently by the configuration application 30 at 35 to the update interface 24. To the extent that identifying information for the given medical resides at the configuration device, such identifying information is appended to the record communicated to the update interface 24. Upon receiving the update record, the update interface 24 will in turn update the audit database 28 regarding the product update.

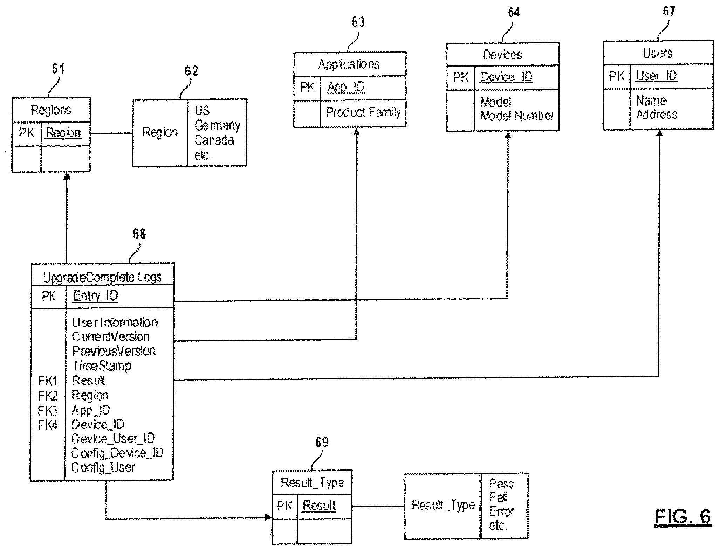

FIG. 6 illustrates an exemplary data model for the audit log database 28. In an exemplary embodiment, the update interface 24 will create an upgrade complete log entry 68 for each product update. The primary key of the upgrade complete log entry 68 is a unique entry ID. Each entry will include information regarding the product update such as an identifier for the application update, a timestamp of when the update occurred as well as an indication of the update result. Each entry will also include identifying information for the configuration device (Config_Device_ID) and a user associated with the configuration application (Config_User) as well as identifying information for the given medical device (Device_ID). In some embodiments, the record may further include identifying information for the user associated with the given medical device (Device_User_ID). Thus, an entry has been created in the audit database 28 for each update to a given medical device. In the event of a product defect, the audit database 28 may be queried to determine which devices, if any, have been affected. Furthermore, the audit database 28 enables the update distributor (e.g., a device manufacturer) to contact the users of the medical devices either directly or via the healthcare provider who distributed the updates. Other implementations for the audit log database are contemplated by this disclosure.

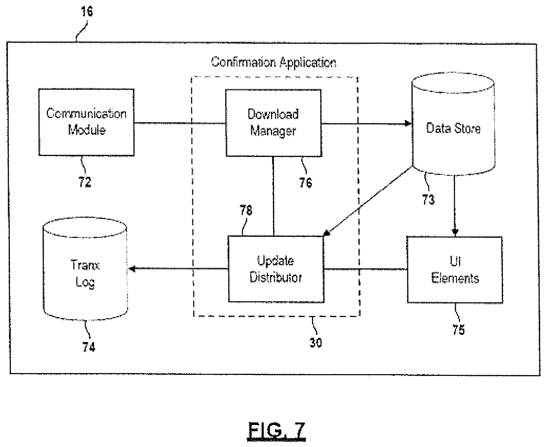

FIG. 7 illustrates an exemplary construct for the configuration device 16. In the exemplary embodiment, the configuration device 16 includes a configuration application 30, a communication module 72, a distribution data store 73, a transaction log 74 and one or more user interface components 75. More specifically, the configuration application 30 is comprised of a download manager 76 and an update distributor 78. The download manager 76 interfaces with the update interface 24 to download product updates in the manner set forth above. To do so, the download manager 76 is in data communication via the communication module 72 over a telecommunication network with the update interface 24 residing on the distribution server 14. For example, the download manager 76 may be connected by a modem over a telephone network or a computer network (e.g., the Internet) to the distribution server 14. In another example, the download manager 76 may be connected wirelessly via a cellular transceiver to the distribution server 14. Other types of communication modules and data links are contemplated by this disclosure. The download manager 76 stores the product updates downloaded from the distribution server 14 in the distribution data store73 residing on the configuration device 16. In an exemplary embodiment, the distribution data store73 may employ a data structure similar to the data model for the distribution database 26. In this way, the configuration device can subsequently distribute the product updates from the data store 73 to one or more medical devices 18 while offline from the distribution server 14

The update distributor 78 is primarily responsible for distributing product updates to one or more medical devices 18. During operation, the update distributor 78 is configured to capture identifying information for the user who intends to distribute product updates to end user devices. For example, the update distributor 78 may learn the identity of the user during a sign-in procedure. In the case of a multi-practitioner healthcare provider, the user may be one of a plurality of users authorized to use the configuration application 30. In most situations, the user of the update distributor 78 differs from the user associated with the medical devices 18 receiving a product update from the update distributor 78.

Following a product update to a device, the update distributor 78 further operates to create a record for the product update in the transaction log 74. Since product updates can occur when the configuration device 16 is offline (i.e., not in data communication) from the distribution server 14, the configuration application 30 mandates updating the transaction log 74 for each product update. By enforcing maintenance of a transaction log 74, the configuration application 30 is able to provide a record for each product update back to the distribution server 14 for audit purposes. Upon initiating data communication with the distribution server 14 or periodically thereafter, the download manager 76 will upload the transaction log 74 to the update interface 24 which in turn updates the audit database 28 accordingly.

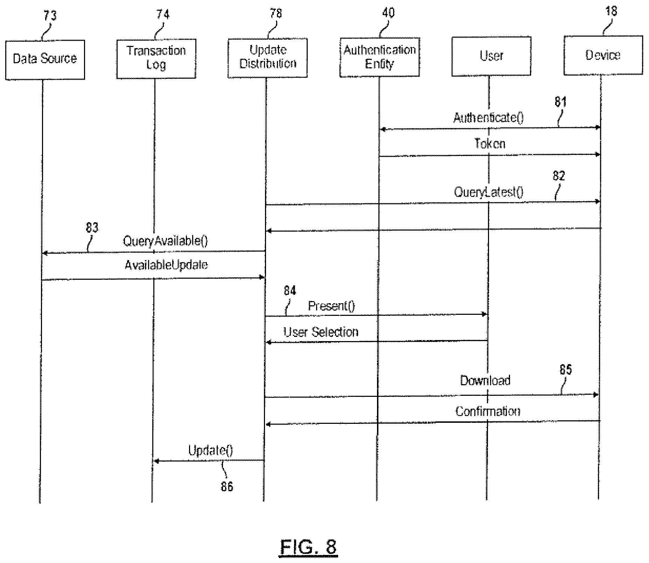

FIG. 8 illustrates an exemplary method for distributing product updates from the configuration device 16 to one or more medical devices 18. Before product updates can be distributed, a data link must be established between the configuration device 16 and a target user device 18. For example, communication between devices may be established using a USB connection or some other suitable communication data link. Once connected, the update distributor 78 may initiate the update process automatically or upon receipt of a command from a user.

In the exemplary embodiment, the update distributor 78 may first authenticate the target user device 18 as indicated at 81. Before it can receive product updates, a medical device 18 will register itself with the configuration application 30 as noted above. During the registration process, the configuration application 30 will capture information that uniquely identifies the medical device (e.g., device serial number). During authentication, this identifying information can be used authenticate the medical device 18. The authentication entity may reside on the configuration device or a separate distinct server. When successfully authenticated, the authentication entity 40 returns an authentication token to the medical device 18. Various authentication schemes are readily known and are suitable for use in this context. The medical device 18 may then use the authentication token while interfacing with the update distributor 78.

Next, the update distributor 78 will query the medical device at 82 to determine what packages and versions thereof reside on the medical device. The medical device is configured to provide a listing of such packages to the update distributor 78 in response to the query.

The update distributor 78 will also query distribution data store 73 at 83 to determine what product updates are available for a given medical device. The query may include information that further identifies the given medical device such as a device type or device serial number. This information may be used to constrain the query results. For example, a medical device having the type of blood glucose meter will result in a listing of product updates that vary from those of a medical device having a type of insulin pump. In response to the query, a listing of suitable product updates available for the given device is returned to the update distributor 78. The update distributor 78 may further narrow the listing of suitable product updates by comparing the version of an available package with the version of the package currently installed on the given medical device. Only those packages having a more current version would be included in the list of suitable product updates.

The listing of suitable product updates may be presented at 84 via a display or some other user interface component 75 of the configuration device 16 to the user of the configuration application 30. Given a listing of suitable product updates, the user can then select which product update, if any, to download to the end user device 18. Upon receipt of the user selections, the update distributor 78 initiates download of the product updates as indicated at 85. Alternatively, the update distributor 78 may forego presenting the listing of suitable product updates to the user and proceed to download each of the product updates suitable for the end user device without user intervention.

To complete the download, the medical device communicates a confirming message back to the update distributor 78. The confirming message may include a simple status indicator, such as pass or fail, or may provide a more comprehensive report regarding the installation of the product update on the medical device. Upon receipt of the confirming message, the update distributor 78 will update the transaction log as indicated at 88. The entry in the transaction log will include information of the product updates distributed as well as information identifying the medical device receiving the product updates.

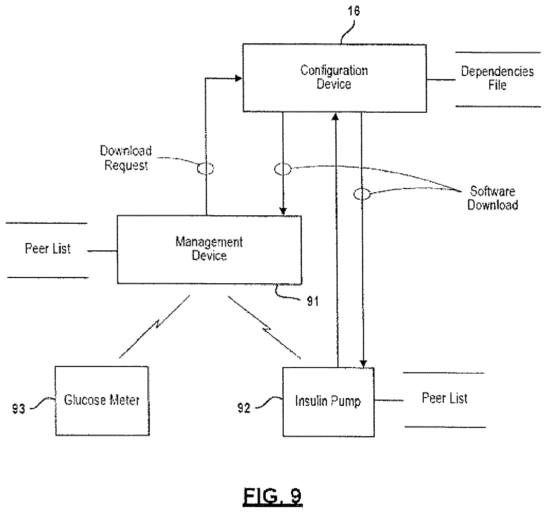

FIG. 9 illustrates an exemplary use case pertaining to medical devices used in diabetes care. In this example, a handheld diabetes management device 91 performs various tasks including measuring and recording blood glucose levels of a patient, determining an amount of insulin to be administered to the patient, scheduling tasks related to diabetes care, etc. In addition, the handheld diabetes management device 91 can transmit commands over a wireless data link to an insulin pump 92 which may in turn selectively deliver insulin to the patient in accordance with the commands. The handheld diabetes management device 91 may also receive and process blood glucose measures from a continuous glucose monitor 93 that senses blood glucose levels at periodic time intervals using a subcutaneous sensor. In these ways, the diabetes management device 91 is interoperable with the insulin pump 92 and the continuous glucose monitor 93.

Given this interoperability, there may be dependencies between software programs on these different devices. For example, the firmware on the continuous glucose meter 93 may not properly interface with an older version of a diabetes management software application residing on the diabetes management device 91. Similarly, the command set used by the diabetes management software application to interface with the insulin pump 92 may not be compatible with a more current version of software operating on the insulin pump 92. Accordingly, the digital distribution platform 10 should be configured to support distribution of product updates to a requesting device taking into account dependencies with other devices which are interoperable with the requesting device.

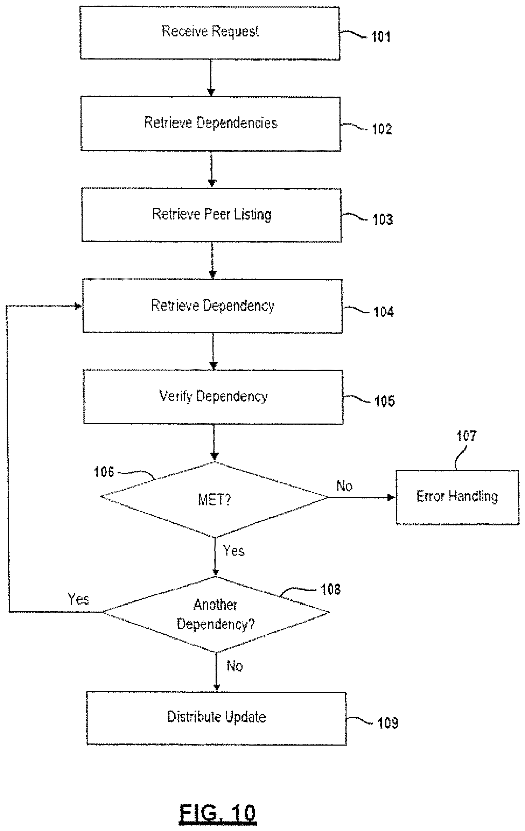

FIG. 10 illustrates a method for distributing product updates from a configuration device 16 in the digital distribution platform 10. The configuration device 16 may interface with the distribution server 14 as well as one or more medical devices 18 in the manner described above. Although the distribution method is described as being carried out by the configuration device 16, it is readily understood that this method may also be implemented on the distribution server 14 when distributing product updates directly to the medical devices 18.

Upon receiving a request to download a product update at 101 from a requesting medical device, the configuration device 16 would first determine at 102 one or more dependencies that must be met before the product update can be downloaded to the requesting medical device. Dependencies for a product update are defined by the publisher of the product update and stored in the distribution database 26 along with other information regarding the product update. When a product update is downloaded from the distribution server 14 to the configuration device 16, dependency data for each product update is likewise downloaded to and stored on the configuration device 16.

Dependency data may be stored on the configuration device 16 in the distribution data store 73 which has a data structure similar to the distribution database 26. Alternatively, the dependency data may be stored in a separate data file residing on the configuration device 16. An exemplary layout for this data file is set forth below.

```
 <package>
      <product> Homer diabetes manager</product>
      <type>Software</type>
      <value>4.0</value>
      <id>12345</id>
      <Dependencies>
              <dependency>
                     <product>Odysseus pump manager</product>
                     <type>Firmware</type>
                     <value>2.0</value>
                     <type>App-to-App</type>
                     <key>13580</key>
              <dependency>
              <dependency>
                     <product>Penelope continuous meter</product>
                     <type>Software</type>
                     <value> 1.2</value>
                     <type>App-to-App</type>
                     <key>24690</key>
              <dependency>
              <dependency>
                     <type>Region</type>
                     <key>US</key>
              <dependency>
      </Dependencies>
 </package>
```

In this example, the product update package is for a product called the 'Homer diabetes manager' which has a product type designated as 'software'. The unique identifier for this package is `12345' and the package pertains to version 4.0 of the product. Three dependencies have been defined for this package. First, this product update package requires that a certain version of the Odysseus pump manager firmware be installed on the insulin pump. Second, this product update package requires that a certain version of the Penelope operational software be installed on the continuous glucose meter. Note that each of these dependencies define an identifier <key> of the corresponding update package that package `12345' depends on. Such identifier can be used to retrieve additional information about the dependency from the dependency file. Third, this product update package is suitable for use in a particular geographic region and thus can only be installed on a requesting device being used in the particular geographic region. Either of the two storage means referenced above are referred to herein generally as the dependency file.

Before distributing a product update, the configuration device 16 must learn which devices are interoperable with the requesting medical device. In one exemplary embodiment, each device requesting a product update maintains a listing of peer devices (i.e., devices it is interoperable with). Peer devices may be added to the listing whenever a requesting medical device pairs with or otherwise establishes a communication link with another device. In another exemplary embodiment, the listing of peer devices may be downloaded from the distribution server 14 to the configuration device 16. For each peer device in the listing, the listing further includes an enumeration of software as well as associated data files residing on a given peer device. Continuing with the example set forth above, an exemplary layout for the listing of peer devices is as follows:

```
      <Device_ID>
      <Model Number>
      <Device type>lnsulin pump</device type>
 
      <Products>
              <product>Odysseus pump manager</product>
              <type>Firmware</type>
              <value>2.0</value>
 
              <product>Ulysses user interface</product>
              <type>Software</type>
              <value>4.0</value>
 
      <Device_ID>
      <Model Number>
      <Device type>Continuous glucose meter</device type>
 
              <product>Penelope continuous meter</product>
              <type>Software</type>
              <value>1.2</value>
```

In this way, dependencies between devices may be verified before a product update is distributed to a requesting medical device.

For a requested product update, dependencies are verified by the update distributor 78 of the configuration device 16. To do so, a dependency is retrieved at 104 from the dependency file. The dependency is then verified at 105. Verification of a dependency depends upon the dependency type. For example, a dependency for software specifies a version of that software that must reside on the peer device. In a simplified embodiment, each software entity in the listing of peer devices is checked against the retrieved dependency. When the product identifier for the software entity in the listing matches the product identifier for the dependency, the version of the software in the listing is compared to the specified version of the software in the dependency. The dependency is met or satisfied when the software residing on the peer device has a version as recent as the version of software specified by the dependency. In a typical versioning scheme, versions are ordered in ascending order such that any version higher than the specified version would satisfy the dependency.

In another embodiment, dependencies may specify the type of device the software resides on. When the software specified by a dependency is not found in the listing of peer device for a device having a matching device type, the dependency is not met.

A dependency having a region type specifies the intended geographic area of use for the product update. To verify this dependency, the update distributor receives an identifier for the geographic region associated with the requesting medical device. In one embodiment, the identifier accompanies the request to download a product update from the requesting device. When the value for the region type matches the identifier for the geographic region, the dependency is met.

When a given dependency has been satisfied, another dependency is retrieved and verified as indicated at 108 until all of the dependencies associated with the product update have been verified. If a given dependency is not met, then the update distributor will proceed with error processing as indicate at 107. In one embodiment, the product update is aborted and the user is notified of the compatibility issue. In this exemplary embodiment, when each of the dependencies for the product update has been met, the product update is distributed at 109 to the requesting device. In other embodiments, two or more dependencies may be defined as OR conditions. It is readily understood that the verification procedure could be modified to accommodate such conditions between dependencies.

As used herein, the term module may refer to, be part of, or include an Application Specific Integrated Circuit (ASIC); an electronic circuit; a combinational logic circuit; a field programmable gate array (FPGA); a processor (shared, dedicated, or group) that executes code; other suitable components that provide the described functionality; or a combination of some or all of the above, such as in a system-on-chip. The term module may include memory (shared, dedicated, or group) that stores code executed by the processor.

The term code, as used above, may include software, firmware, and/or microcode, and may refer to programs, routines, functions, classes, and/or objects. The term shared, as used above, means that some or all code from multiple modules may be executed using a single (shared) processor. In addition, some or all code from multiple modules may be stored by a single (shared) memory. The term group, as used above, means that some or all code from a single module may be executed using a group of processors. In addition, some or all code from a single module may be stored using a group of memories.

The apparatuses and methods described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

## Claims

1. A method for distributing a product update in a digital distribution platform (10), comprising
- providing a distribution server (14) or a configuration device (16);
- providing one or more medical devices (18);
- receiving a request to download a product update from a requesting medical device in the distribution server (14) or the configuration device (16);
- determining, by the distribution server (14) or the configuration device (16), a first dependency that must be met before the product update can be downloaded to the requesting medical device, wherein the first dependency for the product update is defined by a publisher of the product update and stored in a dependency file in a distribution database (26) along with other information regarding the product update;
- verifying the first dependency by the distribution server (14) or the configuration device (16), comprising retrieving the first dependency from the dependency file; and
- distributing the product update from the distribution server (14) or the configuration device (16) to the requesting medical device, if the first dependency associated with the product update is verified.

2. Method of claim 1, wherein the product update is selected from the following: a software update, a firmware update, a language update, a document update, and a database update.

3. Method of at least one of the preceding claims, wherein the dependency specifies a dependency type for the product update selected from the following:
- a version of a software for a software update;
- a device type for the requesting medical device; and
- a region type specifying an intended geographical area of use.

4. Method of at least one of the preceding claims, wherein the dependency specifies a device-to-device dependency for the product update, the device-to-device dependency defining that a product update must be performed on one of the medical devices (18) in order for a product update to be applied to another one of the medical devices (18).

5. Method of at least one of the preceding claims, wherein the dependency specifies an application-to-application dependency for the product update, the application-to-application dependency defining that a product update must be performed on one application in order for a requested product update to be applied to another application.

6. Method of at least one of the preceding claims, further comprising:
- verifying a second dependency by one of the distribution server (14) and the configuration device (16), comprising retrieving the second dependency from the dependency file; and
- distributing the product update to the requesting medical device, if at least one of the first and second dependency associated with the product update is verified.

7. Method of claim 6, further comprising:
- if the first dependency has been verified, verifying the second dependency by one of the distribution server (14) and the configuration device (16), comprising retrieving the second dependency from the dependency file; and
- distributing the product update to the requesting medical device, if both the first dependency and the second dependency associated with the product update are verified.

8. Method of at least one of the preceding claims, further comprising:
- the first dependency specifying a version of software that resides on a device which is interoperable with the requesting medical device,
- receiving a listing of peer devices that are interoperable with the requesting medical device;
- in response to the request to download, comparing the first dependency with software residing on each peer device in the listing of peer devices; and
- distributing the product update to the requesting medical device when the first dependency is met.

9. Method of at least one of the preceding claims, further comprising
- the configuration application (30) registering itself with an update interface (24) on the configuration device (16); and
- registering the one or more medical devices (18) with the configuration application (30) before distributing the product update to the requesting medical device, comprising the configuration application (30) capturing information that uniquely identifies the one or more medical devices (18).

10. Method of claim 9, further comprising the configuration application (30) registering itself with an update interface (24) provided in the distribution server (14) and configured to distribute product updates published in the distribution database (26), comprising capturing information that uniquely identifies a healthcare providing entity associated with the configuration application (30).

11. A digital distribution platform (10), comprising
- one or more medical devices (18);
- a distribution server (14) or a configuration device (16); and
- a distribution database (26); and
configured to:
- receive a request to download a product update from a requesting medical device in the distribution server (14) or the configuration device (16);
- determine, by the distribution server (14) or the configuration device (16), a first dependency that must be met before the product update can be downloaded to the requesting medical device, wherein the first dependency for the product update is defined by a publisher of the product update and stored in a dependency file in the distribution database (26) along with other information regarding the product update;
- verify the first dependency by the distribution server (14) or the configuration device (16), comprising retrieving the first dependency from the dependency file; and
- distribute the product update from the distribution server (14) or the configuration device (16) to the requesting medical device, if the first dependency associated with the product update is verified.

12. Digital distribution platform (10) of claim 11, comprising a distribution server (14), and further configured to:
- receive the request to download the product update from the requesting medical device in the distribution server (14);
- determine the first dependency by the distribution server (14); and
- verify the first dependency by the distribution server (14).

13. Digital distribution platform (10) of claim 11, comprising a configuration device (16), and further configured to:
- receive the request to download the product update from the requesting medical device in the configuration device (16);
- determine the first dependency by the configuration device (16); and
- verify the first dependency by the configuration device (16).

## Patentansprüche

1. Verfahren zum Verteilen einer Produktaktualisierung in einer digitalen Verteilungsplattform (10), umfassend
- Bereitstellen eines Verteilungsservers (14) oder einer Konfigurationsvorrichtung (16);
- Bereitstellen einer oder mehrerer medizinischer Vorrichtungen (18);
- Empfangen einer Anfrage zum Herunterladen einer Produktaktualisierung von einer anfragenden medizinischen Vorrichtung in dem Verteilungsserver (14) oder der Konfigurationsvorrichtung (16);
- Bestimmen, mittels des Verteilungsservers (14) oder der Konfigurationsvorrichtung (16), einer ersten Abhängigkeit, die erfüllt sein muss, bevor die Produktaktualisierung auf die anfragende medizinische Vorrichtung heruntergeladen werden kann, wobei die erste Abhängigkeit für die Produktaktualisierung von einem Herausgeber der Produktaktualisierung definiert und zusammen mit anderen Informationen bezüglich der Produktaktualisierung in einer Abhängigkeitsdatei in einer Verteilungsdatenbank (26) gespeichert ist;
- Verifizieren der ersten Abhängigkeit mittels des Verteilungsservers (14) oder der Konfigurationsvorrichtung (16), umfassend das Abrufen der ersten Abhängigkeit aus der Abhängigkeitsdatei; und
- Verteilen der Produktaktualisierung aus dem Verteilungsserver (14) oder der Konfigurationsvorrichtung (16) an die anfragende medizinische Vorrichtung, wenn die mit der Produktaktualisierung in Verbindung stehende erste Abhängigkeit verifiziert ist.

2. Verfahren nach Anspruch 1, wobei die Produktaktualisierung aus Folgendem ausgewählt wird: einer Softwareaktualisierung, einer Firmwareaktualisierung, einer Sprachenaktualisierung, einer Dokumentenaktualisierung und einer Datenbankaktualisierung.

3. Verfahren nach mindestens einem der vorstehenden Ansprüche, wobei die Abhängigkeit einen Abhängigkeitstyp für die Produktaktualisierung spezifiziert, der aus Folgendem ausgewählt wird:
- einer Version einer Software für eine Softwareaktualisierung;
- einem Vorrichtungstyp für die anfragende medizinische Vorrichtung; und
- einem Regionentyp, der einen vorgesehenen geographischen Nutzungsbereich spezifiziert.

4. Verfahren nach mindestens einem der vorstehenden Ansprüche, wobei die Abhängigkeit eine Vorrichtung-zu-Vorrichtung-Abhängigkeit für die Produktaktualisierung spezifiziert, wobei die Vorrichtung-zu-Vorrichtung-Abhängigkeit definiert, dass eine Produktaktualisierung an einer der medizinischen Vorrichtungen (18) durchgeführt werden muss, damit eine Produktaktualisierung auf eine andere der medizinischen Vorrichtungen (18) angewandt werden kann.

5. Verfahren nach mindestens einem der vorstehenden Ansprüche, wobei die Abhängigkeit eine Anwendung-zu-Anwendung-Abhängigkeit für die Produktaktualisierung spezifiziert, wobei die Anwendung-zu-Anwendung-Abhängigkeit definiert, dass eine Produktaktualisierung an einer Anwendung durchgeführt werden muss, damit eine angefragte Produktaktualisierung auf eine andere Anwendung angewandt werden kann.

6. Verfahren nach mindestens einem der vorstehenden Ansprüche, ferner umfassend:
- Verifizieren einer zweiten Abhängigkeit mittels eines von dem Verteilungsserver (14) und der Konfigurationsvorrichtung (16), umfassend das Abrufen der zweiten Abhängigkeit aus der Abhängigkeitsdatei; und
- Verteilen der Produktaktualisierung auf die anfragende medizinische Vorrichtung, wenn mindestens eine von der ersten und zweiten Abhängigkeit, die mit der Produktaktualisierung in Verbindung stehen, verifiziert ist.

7. Verfahren nach Anspruch 6, ferner umfassend:
- Verifizieren einer zweiten Abhängigkeit mittels eines von dem Verteilungsserver (14) und der Konfigurationsvorrichtung (16), umfassend das Abrufen der zweiten Abhängigkeit aus der Abhängigkeitsdatei, wenn die erste Abhängigkeit verifiziert worden ist; und
- Verteilen der Produktaktualisierung auf die anfragende medizinische Vorrichtung, wenn sowohl die erste Abhängigkeit als auch die zweite Abhängigkeit, die mit der Produktaktualisierung in Verbindung stehen, verifiziert sind.

8. Verfahren nach mindestens einem der vorstehenden Ansprüche, ferner umfassend:
- die erste Abhängigkeit spezifiziert eine Version von Software, die sich auf einer Vorrichtung befindet, die zusammen mit der anfragenden medizinischen Vorrichtung betreibbar ist,
- Empfangen einer Auflistung von Peer-Vorrichtungen, die zusammen mit der anfragenden medizinischen Vorrichtung betreibbar sind;
- Vergleichen der ersten Abhängigkeit mit Software, die sich auf jeder Peer-Vorrichtung in der Auflistung von Peer-Vorrichtungen befindet, als Reaktion auf die Anfrage zum Herunterladen; und
- Verteilen der Produktaktualisierung auf die anfragende medizinische Vorrichtung, wenn die erste Abhängigkeit erfüllt wird.

9. Verfahren nach mindestens einem der vorstehenden Ansprüche, ferner umfassend
- die Konfigurationsanwendung (30) registriert sich selbst an einer Aktualisierungsschnittstelle (24) auf der Konfigurationsvorrichtung (16); und
- Registrieren der einen oder mehreren medizinischen Vorrichtungen (18) an der Konfigurationsanwendung (30), bevor die Produktaktualisierung auf die anfragende medizinische Vorrichtung verteilt wird, was umfasst, dass die Konfigurationsanwendung (30) Informationen erfasst, welche die eine oder mehreren medizinischen Vorrichtungen (18) eindeutig identifizieren.

10. Verfahren nach Anspruch 9, ferner umfassend, dass die Konfigurationsanwendung (30) sich selbst an einer Aktualisierungsschnittstelle (24) registriert, die in dem Verteilungsserver (14) vorgesehen und dafür ausgebildet ist, Produktaktualisierungen, die in der Verteilungsdatenbank (26) veröffentlicht sind, zu verteilen, umfassend das Erfassen von Informationen, die eindeutig einen Gesundheitsdienstleiter identifizieren, der mit der Konfigurationsanwendung (30) in Verbindung steht.

11. Digitale Verteilungsplattform (10), umfassend
- eine oder mehrere medizinische Vorrichtungen (18);
- einen Verteilungsserver (14) oder eine Konfigurationsvorrichtung (16); und
- eine Verteilungsdatenbank (26); und
dazu eingerichtet:
- eine Anfrage zum Herunterladen einer Produktaktualisierung von einer anfragenden medizinischen Vorrichtung in dem Verteilungsserver (14) oder der Konfigurationsvorrichtung (16) zu empfangen;
- mittels des Verteilungsservers (14) oder der Konfigurationsvorrichtung (16) eine erste Abhängigkeit zu bestimmen, die erfüllt sein muss, bevor die Produktaktualisierung auf die anfragende medizinische Vorrichtung heruntergeladen werden kann, wobei die erste Abhängigkeit für die Produktaktualisierung von einem Herausgeber der Produktaktualisierung definiert und zusammen mit anderen Informationen bezüglich der Produktaktualisierung in einer Abhängigkeitsdatei in der Verteilungsdatenbank (26) gespeichert ist;
- die erste Abhängigkeit mittels des Verteilungsservers (14) oder der Konfigurationsvorrichtung (16) zu verifizieren, umfassend das Abrufen der ersten Abhängigkeit aus der Abhängigkeitsdatei; und
- die Produktaktualisierung von dem Verteilungsserver (14) oder der Konfigurationsvorrichtung (16) auf die anfragende medizinische Vorrichtung zu verteilen, wenn die erste Abhängigkeit, die mit der Produktaktualisierung in Verbindung steht, verifiziert ist.

12. Digitale Verteilungsplattform (10) nach Anspruch 11, umfassend einen Verteilungsserver (14) und ferner dafür ausgebildet:
- die Anfrage zum Herunterladen der Produktaktualisierung von der anfragenden medizinischen Vorrichtung in dem Verteilungsserver (14) zu empfangen;
- die erste Abhängigkeit mittels des Verteilungsservers (14) zu bestimmen; und
- die erste Abhängigkeit mittels des Verteilungsservers (14) zu verifizieren.

13. Digitale Verteilungsplattform (10) nach Anspruch 11, umfassend eine Konfigurationsvorrichtung (16) und ferner dafür ausgebildet:
- die Anfrage zum Herunterladen der Produktaktualisierung von der anfragenden medizinischen Vorrichtung in der Konfigurationsvorrichtung (16) zu empfangen;
- die erste Abhängigkeit mittels der Konfigurationsvorrichtung (16) zu bestimmen; und
- die erste Abhängigkeit mittels der Konfigurationsvorrichtung (16) zu verifizieren.

## Revendications

1. Procédé de distribution d'une mise à jour de produit dans une plateforme de distribution numérique (10), comprenant
- la fourniture d'un serveur de distribution (14) ou d'un dispositif de configuration (16) ;
- la fourniture d'un ou plusieurs dispositifs médicaux (18) ;
- la réception d'une requête pour télécharger une mise à jour de produit depuis un dispositif médical effectuant la requête dans le serveur de distribution (14) ou le dispositif de configuration (16) ;
- la détermination, par le serveur de distribution (14) ou le dispositif de configuration (16), d'une première dépendance qui doit être satisfaite avant que la mise à jour de produit ne puisse être téléchargée sur le dispositif médical effectuant la requête, dans lequel la première dépendance pour la mise à jour de produit est définie par un éditeur de la mise à jour de produit et stockée dans un fichier de dépendances dans une base de données de distribution (26) conjointement avec d'autres informations concernant la mise à jour de produit ;
- la vérification de la première dépendance par le serveur de distribution (14) ou le dispositif de configuration (16), comprenant la récupération de la première dépendance depuis le fichier de dépendances ; et
- la distribution de la mise à jour de produit depuis le serveur de distribution (14) ou le dispositif de configuration (16) vers le dispositif médical effectuant la requête, si la première dépendance associée à la mise à jour de produit est vérifiée.

2. Procédé selon la revendication 1, dans lequel la mise à jour de produit est choisie parmi les suivantes : une mise à jour de logiciel, une mise à jour de micrologiciel, une mise à jour de langage, une mise à jour de document et une mise à jour de base de données.

3. Procédé selon au moins l'une des revendications précédentes, dans lequel la dépendance spécifie un type de dépendance pour la mise à jour de produit choisi parmi les suivants :
- une version d'un logiciel pour une mise à jour de logiciel ;
- un type de dispositif pour le dispositif médical effectuant la requête ; et
- un type de région spécifiant une zone géographique d'utilisation prévue.

4. Procédé selon au moins l'une des revendications précédentes, dans lequel la dépendance spécifie une dépendance dispositif à dispositif pour la mise à jour de produit, la dépendance dispositif à dispositif définissant qu'une mise à jour de produit doit être réalisée sur l'un des dispositifs médicaux (18) pour qu'une mise à jour de produit soit appliquée à un autre parmi les dispositifs médicaux (18).

5. Procédé selon au moins l'une des revendications précédentes, dans lequel la dépendance spécifie une dépendance application à application pour la mise à jour de produit, la dépendance application à application définissant qu'une mise à jour de produit doit être réalisée sur une application pour qu'une mise à jour de produit requise soit appliquée à une autre application.

6. Procédé selon au moins l'une des revendications précédentes, comprenant en outre :
- la vérification d'une seconde dépendance par l'un parmi le serveur de distribution (14) et le dispositif de configuration (16), comprenant la récupération de la seconde dépendance depuis le fichier de dépendances ; et
- la distribution de la mise à jour de produit au dispositif médical effectuant la requête, si au moins l'une parmi la première et la seconde dépendance associée à la mise à jour de produit est vérifiée.

7. Procédé selon la revendication 6, comprenant en outre :
- si la première dépendance a été vérifiée, la vérification de la seconde dépendance par l'un parmi le serveur de distribution (14) et le dispositif de configuration (16), comprenant la récupération de la seconde dépendance depuis le fichier de dépendances ; et
- la distribution de la mise à jour de produit au dispositif médical effectuant la requête, si à la fois la première dépendance et la seconde dépendance associées à la mise à jour de produit sont vérifiées.

8. Procédé selon au moins l'une des revendications précédentes, comprenant en outre :
- la première dépendance spécifiant une version de logiciel qui réside sur un dispositif qui est interopérable avec le dispositif médical effectuant la requête,
- la réception d'une liste de dispositifs homologues qui sont interopérables avec le dispositif médical effectuant la requête ;
- en réponse à la requête à télécharger, la comparaison de la première dépendance avec le logiciel résidant sur chaque dispositif homologue dans la liste de dispositifs homologues ; et
- la distribution de la mise à jour de produit au dispositif médical effectuant la requête lorsque la première dépendance est satisfaite.

9. Procédé selon au moins l'une des revendications précédentes, comprenant en outre
- l'application de configuration (30) s'enregistrant elle-même avec une interface de mise à jour (24) sur le dispositif de configuration (16) ; et
- l'enregistrement du ou des dispositifs médicaux (18) avec l'application de configuration (30) avant la distribution de la mise à jour de produit au dispositif médical effectuant la requête, comprenant l'application de configuration (30) capturant des informations qui identifient de manière unique le ou les dispositifs médicaux (18).

10. Procédé selon la revendication 9, comprenant en outre l'application de configuration (30) s'enregistrant elle-même avec une interface de mise à jour (24) fournie dans le serveur de distribution (14) et configurée pour distribuer les mises à jour de produit publiées dans la base de données de distribution (26), comprenant la capture d'informations qui identifient de manière unique une entité de fourniture de soins de santé associée à l'application de configuration (30).

11. Plateforme de distribution numérique (10), comprenant
- un ou plusieurs dispositifs médicaux (18) ;
- un serveur de distribution (14) ou un dispositif de configuration (16) ; et
- une base de données de distribution (26) ; et
configurée pour :
- recevoir une requête pour télécharger une mise à jour de produit depuis un dispositif médical effectuant la requête dans le serveur de distribution (14) ou le dispositif de configuration (16) ;
- déterminer, par le serveur de distribution (14) ou le dispositif de configuration (16), une première dépendance qui doit être satisfaite avant que la mise à jour de produit ne puisse être téléchargée sur le dispositif médical effectuant la requête, dans laquelle la première dépendance pour la mise à jour de produit est définie par un éditeur de la mise à jour de produit et stockée dans un fichier de dépendances dans la base de données de distribution (26) conjointement avec d'autres informations concernant la mise à jour de produit ;
- vérifier la première dépendance par le serveur de distribution (14) ou le dispositif de configuration (16), comprenant la récupération de la première dépendance depuis le fichier de dépendances ; et
- distribuer la mise à jour de produit depuis le serveur de distribution (14) ou le dispositif de configuration (16) vers le dispositif médical effectuant la requête, si la première dépendance associée à la mise à jour de produit est vérifiée.

12. Plateforme de distribution numérique (10) selon la revendication 11, comprenant un serveur de distribution (14), et en outre configurée pour :
- recevoir la requête pour télécharger la mise à jour de produit depuis le dispositif médical effectuant la requête dans le serveur de distribution (14) ;
- déterminer la première dépendance par le serveur de distribution (14) ; et
- vérifier la première dépendance par le serveur de distribution (14).

13. Plateforme de distribution numérique (10) selon la revendication 11, comprenant un dispositif de configuration (16), et en outre configurée pour :
- recevoir la requête pour télécharger la mise à jour de produit depuis le dispositif médical effectuant la requête dans le dispositif de configuration (16) ;
- déterminer la première dépendance par le dispositif de configuration (16) ; et
- vérifier la première dépendance par le dispositif de configuration (16).
